# EUROPÄISCHE PATENTSCHRIFT

(11) **EP 1 218 644 B1**
(45) Veröffentlichungstag und Bekanntmachung des Hinweises auf die Patenterteilung: **01.12.2004**
(21) Anmeldenummer: 00967680.0
(22) Anmeldetag: 15.09.2000
(51) Int. Cl.: F16D 59/02, F16D 65/21, F16D 55/224

(54) **ZUSPANNVORRICHTUNG FÜR EINE FAHRZEUGBREMSE**
BRAKE APPLICATION DEVICE FOR A MOTOR VEHICLE BRAKE
DISPOSITIF DE SERRAGE DE FREIN POUR UN FREIN DE VEHICULE AUTOMOBILE

(30) Priorität: 23.09.1999 DE 19945702
(43) Veröffentlichungstag der Anmeldung: 03.07.2002
(73) Patentinhaber: KNORR-BREMSE Systeme für Schienenfahrzeuge GmbH, 80809 München (DE)
(72) Erfinder: VOHLA, Manfred, 80995 München (DE)
(74) Vertreter: Mattusch, Gundula
(86) Internationale Anmeldenummer: PCT/EP2000/009016
(87) Internationale Veröffentlichungsnummer: WO 2001/021973

(56) Entgegenhaltungen:
- EP-A- 0 334 434
- GB-A- 909 176
- US-A- 4 546 297
- US-A- 4 784 244
- US-A- 5 620 077

## Beschreibung

Die Erfindung betrifft eine Zuspannvorrichtung für eine Fahrzeugbremse, insbesondere für eine Schienenfahrzeugbremse, nach dem Oberbegriff des Anspruches 1.

Eine Zuspannvorrichtung dieser Art ist aus der 19514 463 C bekannt.

In dieser Schrift wird eine Kombination aus einer pneumatischen Betriebsbremse mit einer Federspeicher-Feststellbremse beschrieben. Der Federspeicher wird über ein vollständiges Entlüften des Federspeicherzylinders eingelegt.

Die EP 0 125 873 B1 beschreibt einen Bremsaktuator mit einem elektromotorischen Antrieb zum Spannen eines Federspeichers. Bei der Federspeicherbetriebsbremse ist die maximale Zuspannkraft durch einen verschiebbaren elastischen Anschlag einstellbar.

Aus der EP 0 693 633 A2 ist darüber hinaus eine Permanentmagnetbremse bekannt, bei welcher die Zuspannkraft durch zwei Magnetanordnungen erzeugt wird. Die beiden Magnetkräfte können sich addieren oder subrahieren.

Die US 5 620 077 beschreibt darüber hinaus eine Federspeicherbetriebsbremse, bei der ein Elektromotor zum Spannen eines Federspeichers eingesetzt wird. Der Elektromotor und der Federspeicher als Bremsaktuator sind über eine elektrisch betätigbare Kupplungseinrichtung miteinander verbunden. Der Bremsaktuator mit dem Federspeicher arbeitet derart, daß die Lösestellung durch Komprimieren der Feder erreichbar wird. Die Spindel ist aber nur in eine Richtung wirksam, und zwar in Richtung des Spannens der Feder. Durch die Auslegung derart, daß die Bremse federbetätigt ist und daß es elektrischer Energie bedarf, um die Bremse zu lösen bzw. um die Feder zu komprimieren, wird eine "Fail-Safe-Auslegung" der Bremse erreicht.

Im wesentlichen werden derzeit im Schienenfahrzeugbereich zwei Rad-Bremssysteme eingesetzt: pneumatische Bremssysteme (zu denen auch elektropneumatische Systeme und Vakuumbremsen gerechnet werden können) und (elektro-)hydraulische Bremssysteme. Rein elektromechanische Bremssysteme haben sich bisher nicht im nennenswerten Umfang am Markt etablieren können.

Die Krafterzeugung wird bei beiden Technologien durch Kolben in Zylindern realisiert, welche i.allg. nur eine Wirkrichtung besitzen. Die Rückstellung der Kolben erfolgt durch die infolge der elastischen Verformung des Bremsgestänges auftretenden Kräfte sowie durch Rückstellfedern, die zudem das Einnehmen einer Endlage sicherstellen. Sonderbauformen mit einem Doppelzylinder (d.h. mit einem möglichen Druckaufbau an jeder Seite des Kolbens zur Realisierung von zwei Wirkrichtungen) haben sich insbesondere aus Kostengründen nicht durchsetzen können.

Auch aufgrund des bevorzugten Einsatzes von Kolben mit nur einer Wirkrichtung wird bei der Konfiguration eines Bremssystemes entweder ein aktives oder ein passives Bremssystem realisiert. Diese Systeme bedingen jedoch leistungsstarke Antriebe bzw. bei eletromechanischen Systemen entsprechend große Motoren. Bei einem passiven System ist zudem eine sehr große Stellfeder erforderlich.

Die lokale Energiespeicherung für den Fall von Versorgungsunterbrechungen erfolgt bei pneumatischen Systemen in Druckluftbehältern bzw. bei hydraulischen Systemen in entsprechenden Hydrobehältem und bei elektromechanischen Systemen durch Zusatzbatterien oder eine redundante Stromversorgung. Zusätzlich beinhalten passive Systeme die Möglichkeit des einmaligen Zuspannens durch die in der Feder gespeicherte Energie.

Bei einem aktiven Bremssystem muß beim Einbremsen mit maximaler Bremskraft die maximale Aktuatorkraft aufgebracht werden, während bei einem passiven Bremssystem die volle Aktuatorkraft zum Lösen eingesetzt wird.

Eine Scheibenbremse gattungsgemäßer Art für Kraftfahrzeuge ist ferner aus der US 4 784 244 bekannt.

Vor diesem Hintergrund hat die Erfindung die Aufgabe an, eine Zuspannvorrichtung zu schaffen, deren Bremskrafterzeuger und Teile deren Bremskraftumsetzers im Vergleich sowohl zum aktiv wirkenden Bremssystem als auch zum passiv wirkenden Bremssystem im wesentlichen kleiner dimensioniert werden können.

Die Erfindung löst diese Aufgabe durch den Gegenstand des Anspruches 1.

An einem definierten Betriebspunkt bzw. für einen Bremszuspannkraftwert zwischen Null und der maximalen Bremskraft wirkt also der Bremsantrieb bzw. der Bremskrafterzeuger nicht; die Bremskraft wird vielmehr an diesem Punkt allein vom Energiespeicher (z.B. Feder) erzeugt. Dieser "Nullpunkt" reiner Feder-Bremskrafterzeugung liegt andererseits auch nicht wie beim rein passiven System bei der maximalen Bremskraft. Zur Erzeugung der maximalen Bremskraft wirkt vielmehr zusätzlich der Bremskraft- (und Energie)-erzeuger bzw. Bremsantrieb. Zur Erzeugung kleinerer Bremskräfte wirkt der Bremsantrieb quasi als "Bremskraftherabsetzer" der Kraft vom Energiespeicher bzw. der Federkraft entgegen.

Anders als nach dem Stand der Technik bekannt, wird der Bremsantrieb somit in beiden Lastrichtungen, d.h. sowohl zum Anlegen der maximalen Bremskraft als auch zum Lösen der Bremse eingesetzt. Dadurch, daß der Umsetzer derart ausgelegt ist, daß auch bei ausgeschaltetem Bremsantrieb z.B. eine mittlere Bremskraft anliegt, ist lediglich eine Art "unterstützender Antrieb" erforderlich, um entweder die maximale Bremskraft oder die Brems-Lösestellung einzustellen. Der Bremsantrieb - bei einem elektromechanischen System ein Elektromotor - wird dazu genutzt, beim Lösen die Federkraft zu verringern und beim Bremsen nach dem Erreichen des Kräftegleichgewichtes zwischen der Bremszuspannkraft und der Federkraft die Bremskraft weiter zu erhöhen. Der Antrieb arbeitet damit nach einer Art "Zweirichtungsprinzip". Damit kombiniert das Systeme wichtige Vorteile eines passiven Bremssystemes mit Vorteilen eines aktiven Bremssystems. Ähnlich zu einem passiven Bremssystem realisiert auch das erfindungsgemäße System mit Nullpuhktverschiebung eine Art Fail-Safe-System. Andererseits kann eine Speicherfeder zur Bremszuspannung deutlich kleiner realisiert werden.als bei einem rein passiven Bremssystem. Bei einem elektrischen Antrieb können sowohl die Feder als auch deren Spann- und Antriebsmotor aufgrund der Erfindung bis zur Hälfte geringer dimensioniert werden, wobei jedoch der Vorteil durch zunehmende Belastungskollektive, Vorgabe bestimmter Restbremskräfte bei einem Ausfallen der Bremse, Parkbremse und eine weiche Federcharakteristik beliebig und kontinuierlich verringert werden kann.

Da andererseits der Bremsantrieb anders als bei einem aktiven Bremssystem die Bremskraft nicht allein erzeugen muß, kann der Bremsantrieb sowie auch der gesamte Antriebsstrang kleiner dimensioniert werden als bei einem rein aktiven System.

Ein weiterer Vorteil der Erfindung ist schließlich noch darin zu sehen, daß Regelvorgänge im Bereich mittlerer Bremskraft mit der Erfindung - insbesondere nach einem der Unteransprüche 2 bis 4 - nur geringer Stellenergien bedürfen.

Die Unteransprüche 2 bis 4 geben jeweils bevorzugte Auslegungen der Erfindung an (Nullpunkt zwischen 25 und 75%, oder zwischen 40 und 60% oder bei 50%). Oftmals wird als sichere Rückfallebene - z.B. bei einem Ausfall elektrischer Energie - eine Bremskraft von 50% der maximalen Bremskraft genügen. Der Nullpunkt kann im wesentlichen frei gewählt werden, der Fachmann kann sich hierbei an den jeweiligen Sicherheitsanforderungen - nämlich Fahrzeug und Streckenparametern - des Anwendungsfalles orientieren. So wird er den Nullpunkt zur Realisierung genügender Bremsreserven beispielsweise bei der Auslegung eines Straßenbahnbremssystem für eine Stadt mit viel Gefällestrecken einige Prozente "höher" ansiedein als in einer Stadt, deren Straßenbahnsystem weitestgehend frei von großen Gefällestrecken ist.

Besonders bevorzugt wird als Bremsantrieb ein Elektromotor eingesetzt, der durch die Erfindung besonders kompakt ausgelegt werden kann. Alternativ ist es aber auch vorstellbar, daß der Bremsantrieb ein (in zwei Betätigungsrichtungen wirkender) hydraulischer oder pneumatischer Bremszylinder ist oder eine andere in eine oder zwei Richtungen wirkende Einheit.

Als Energiespeicher bietet es sich jeweils an, eine Feder oder ein Federpaket vorzusehen. Diese(s) wird vorzugsweise derart ausgelegt und mit dem Umsetzer und dem Bremsantrieb abgestimmt, daß mit ihr/ihm bei nicht aktivem Bremsantrieb eine definierte, insbesondere eine mittlere, Bremskraft erzeugbar ist. insbesondere werden der Elektromotor und die Feder bzw. das Federpaket derart aufeinander abgestimmt sind, daß
- die Feder oder das Federpaket allein einen definierten Bremskraftwert zwischen der minimalen und der maximalen Bremskraft (Betriebsnullpunkt),
- die Feder und der Elektromotor in Kraftaddition eine Bremskraft größer als die definierte Bremskraft am Betriebsnullpunkt, und
- die Feder und der Elektromotor in Kraftsubtraktion eine Bremskraft kleiner als der Betriebsnullpunkt erzeugen. Durch diese Ausführungsform der Erfindung lassen sich sowohl der Elektromotor als auch die Feder bzw. das Federpaket kleiner auslegen als bei einem rein aktiven oder passiven elektromechanischen Bremssystem, bei dem Feder oder Elektromotor allein jeweils die maximale Brems- oder Lösekraft erzeugen müssen.

Weitere vorteilhafte Ausführungsformen der Erfindung sind den übrigen Unteransprüchen zu entnehmen.

Nachfolgend wird die Erfindung unter Bezug auf die Zeichnung anhand von Ausführungsbeispielen näher beschrieben. Es zeigt:
- Fig. 1: ein erstes Ausführungsbeispiel einer mit einer erfindungsgemäßen Zuspannvorrichtung versehenen Bremszangeneinheit in einer Brems-Lösestellung;
- Fig. 2: die Zuspannvorrichtung der Bremszangeneinheit aus Fig. 1 bei Anliegen der mittleren Bremskraft;
- Fig. 3: die Zuspannvorrichtung der Bremszangeneinheit aus Fig. 1 bei Anliegen der maximalen Bremskraft;
- Fig. 4: ein Bremskraftdiagramm; und
- Fig. 5: ein Diagramm, welches die an wesentlichen Bremselementen auftretenden Kräfte in Abhängigkeit vom Aniegehub bei einer Bremse nach Art der Fig. 1 veranschaulicht.

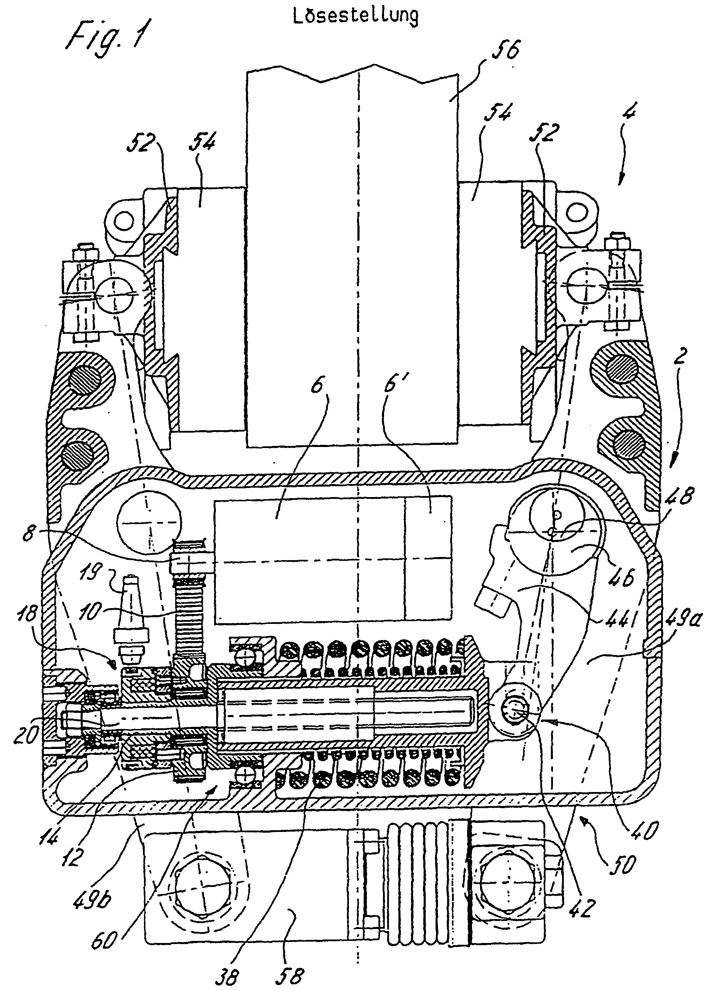

Fig. 1 zeigt eine Zuspannvorrichtung 2 für eine Schienenfahrzeug-Scheibenbremse 4. Die Zuspannvorrichtung 2 umfaßt einen als Elektromotor 6 (mit angesetzter Motorbremse 6') ausgebildeten Bremsantrieb, wobei die Abtriebswelle 8 des Elektromotors (oder die Abtriebswelle eines dem Elektromotor 6 zugeordneten Getriebes) über einen Zahnriemen 10 ein Ritzel 12 antreibt, weiches auf einer mehrfach gestuften Spindelhülse 14 mittels eines (Nadel-)Lagers 16 relativ zur Spindelhülse 14 drehbar gelagert ist.

An eine axiale Stirnseite des Ritzels 12 ist eine Magnet-Zahnkupplung 18 mit Stromzuführung 19 angesetzt, die wiederum auf einem axialen Endabschnitt der Spindelhülse 14 befestigt ist. Dreht sich der Elektromotor 6 und damit über den Zahnriemen 10 das Ritzel 12, so dreht sich die Spindelhülse 14 bei geschlossener Magnet-Zahnkupplung 18 mit. Bei geöffneter Magnet-Zahnkupplung dreht sich das Zahnrad 12 hingegen frei auf der Spindelhülse 14.

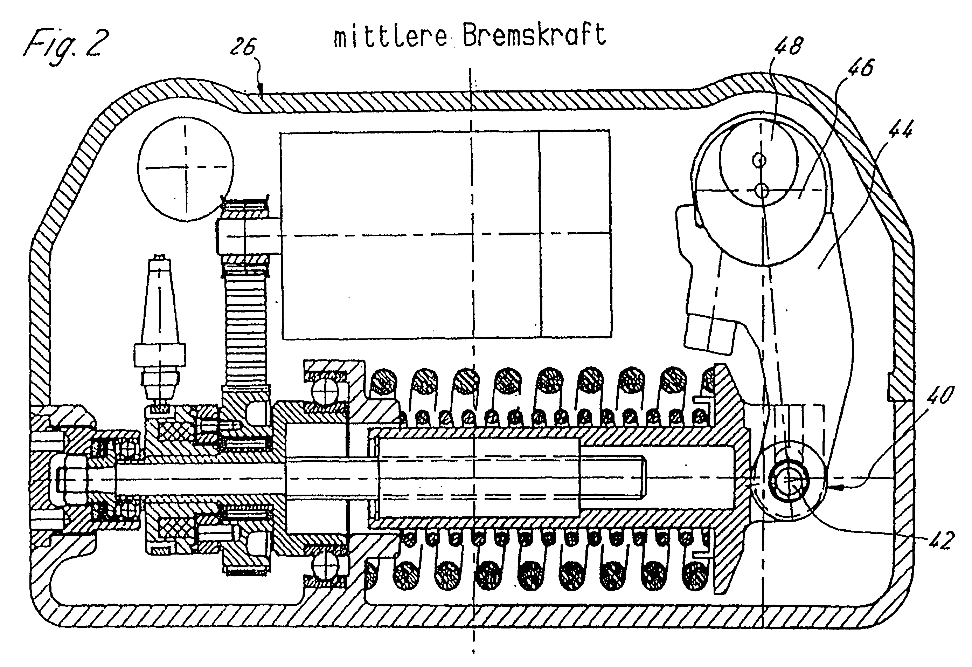

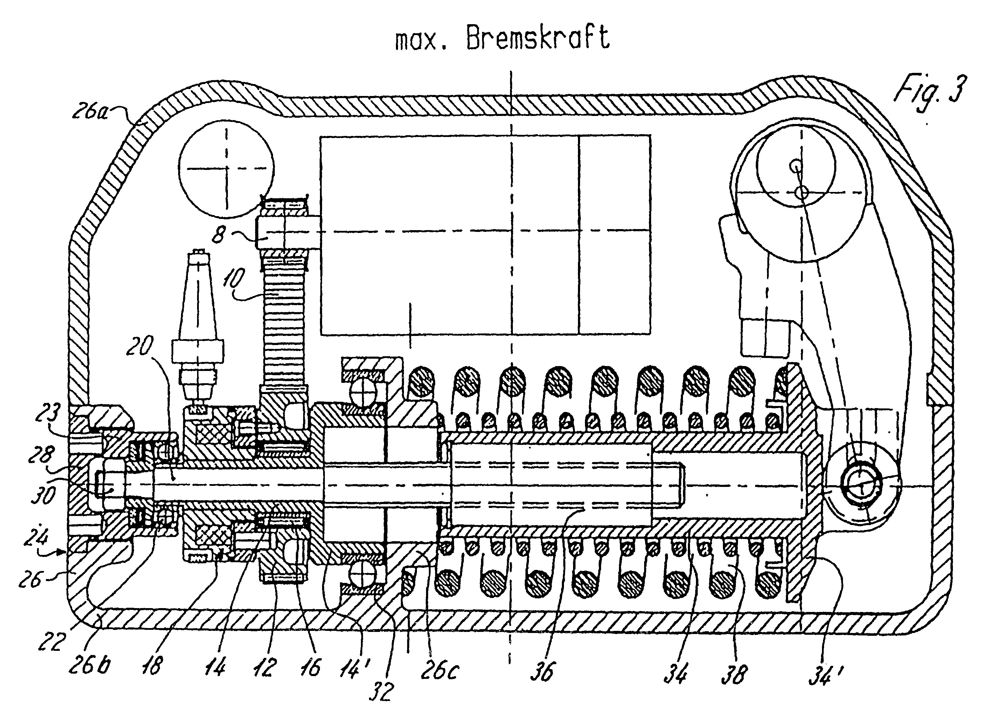

Wie besonders gut in Fig. 2 und 3 zu sehen, ist die Spindelhülse 14 auf einer Welle 20 befestigt, dessen eines axiales Ende mit einem Kugellager 22 drehbar in einer Hülse 23 gelagert ist, die unverdrehbar in eine Öffnung 24 eines zweiteiligen Bremsrahmens (bzw. "Sattels") 26 (mit den Abschnitten 26a und 26b) eingesetzt ist. In der Öffnung 24 ist eine Abdeckung 28 verschraubt, welche eine Zugangsmöglichkeit für eine Rückstellmutter 30 zum manuellen Verstellen der Spindel (z.B. zum Lösen der Bremse) bietet.

Die zweite, von der Abdeckung 28 abgewandte, axiale Stimfläche des Ritzels 12 grenzt an eine sich axial verbreiternde Abstufung 14' der Spindel 14 an, wobei der Außenumfang der Abstufung 14' in einen nach innen an den Bremsrahmen 26 angeformten, hohlzylindrischen Rahmenansatz 26c des Bremsrahmens 26 eingreift und im Rahmenansatz 26c mittels eines Wälzlagers 32 drehbar gelagert ist.

Das zweite axiale Ende des Bolzens bzw. der Welle 20 erstreckt sich über die axiale Stirnseite des Rahmenansatzes 26c hinaus. Die Innenwandung des hohlzylindrischen Endbereiches der Abstufung 14' und die Innenwandung des inneren Rahmenansatzes 26' bilden eine hohlzlindrische Aufnahme für ein Ende einer axial verschieblichen, äußeren Hülse 34. In die axiale Öffnung der Hülse 34 ist eine Spindelmutter 36 unverdrehbar eingesetzt, die verdrehbar auf den Bolzen 20, der in diesem Bereich mit Außengewinde versehen ist, aufgesetzt ist. (Hier könnte z. B. ein Wälzspindeltrieb realisiert werden).

Zwischen dem Gehäuseansatz 26c und einem tellerartigen Ansatz 34' der Hülse 34 ist ein Federpaket 38 angeordnet. An die vom Federpaket 38 abgewandte Stirnseite des Hülsenansatzes 34' ist wiederum ein Auge 40 mit einem Langloch 41 angeformt, In das ein Bolzen 42 eingreift, weicher mit einem Ende eines Exzenterhebels 44 einer Exzenteranordnung 46 verbunden ist. Der Exzenter weist eine Exzenterwelle 48 auf, die an einen Zangenhebel 49a angelenkt ist, der mit einem zweiten Zangenhebel 49b eine Bremszange 50 bildet. An den einen Enden der Zangenhebel 49 sind jeweils Belaghalter 52 mit Bremsbelägen 54 angeordnet, die in Richtung der Achse einer Bremsscheibe 56 verschieblich sind. Die von den Bremsbelägen 54 abgewandt liegenden Enden der Zangenhebel 49 sind miteinander über einen Druckstangensteller 58 verbunden, der vorzugsweise elektrisch betätigt ausgelegt ist und einen Kraftsensor und eine Notlöseeinrichtung (nicht dargestellt) umfaßt.

Die Funktion der Bremse wird aus dem Zusammenspiel der Fig. 1 bis 3 deutlich. Fig. 1 veranschaulicht die Lösestellung, Fig. 2 eine Bremsstellung mit mittlerer Bremskraft und Fig. 3 eine Bremsstellung mit maximaler Bremskraft. Die mittlere Bremsstellung wird allein durch die Federkraft erreicht.

Der Elektromotor 6 bildet den Bremskrafterzeuger, die weiteren Elemente des Kraftübertragungswegs "hinter" bzw. vom Elektromotor 6 bis zur Bremsscheibe 56 einen Umsetzer 60. Das Federpaket 38 bildet einen Energiespeicher, der ebenfalls zur Erzeugung von Bremskraft genutzt wird.

Wie zu erkennen, entspannt sich das Federpaket 38 bei zunehmender Bremskraft. Das Federpaket ist dabei derart ausgelegt, daß beim Anliegen einer mittleren Bremskraft keine Bestromung des Motors 6 notwendig ist. Zum Erreichen der Lösestellung und zum Erreichen der maximalen Bremskraft läuft dagegen der Elektromotor 6 jeweils in entgegengesetzter Drehrichtung und verstellt damit die axiale Länge des Linearantriebes aus der Spindelhülse 14, dem Bolzen 20 und der Hülse 34. Eine Längenveränderung des Linearantriebes verstellt wiederum den Exzenter 46 und öffnet oder schließt damit die Bremszange 50.

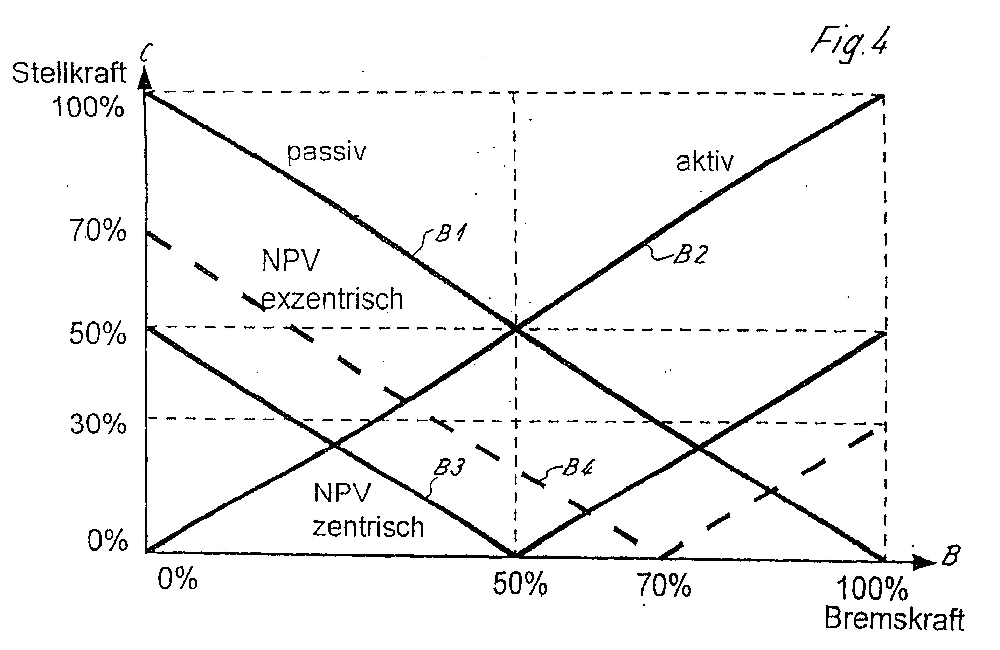

In Fig. 4 gibt die C-Achse die vom Aktuator aufzubringende Kraft und die B-Achse die an den Bremsbacken anliegende Kraft wieder. Die Kurve B1 gibt die Charakteristik eines passiven Bremssystems, die Kurve B2 die Charakteristik eines aktiven Bremssystems und die Kurve B3 die bevorzugte Einstellung des Bremssystemes der Erfindung wieder (zentrischer Nullpunkt). Die Kurve B4 gibt dagegen eine exzentrische Nullpunktverschiebung wieder. Der Nullpunkt liegt bei ca. 70% der maximalen Bremskraft, so daß das System stärker der Auslegung eines passiven Bremssystemes ähnelt (stärkere Feder bzw. stärkere Bremskraft beim Ausfall des Bremskrafterzeugers). Das passive Bremssystem, bei dem bei maximaler Bremskraft der Antrieb eine Kraft von Null Newton erzeugt, wird beispielsweise im Vollbahnbereich und das aktive Bremssystem, bei dem bei maximaler Bremskraft der Antrieb die größte Kraft erzeugt, im U-Bahnbereich eingesetzt. Nach der Erfindung liegt dagegen durch die Speicherfeder 38 allein die mittlere Bremskraft an.

Bei einem praktischen Ausführungsbeispiel nach Art der Fig. 1 kann der Exzenterwellenantrieb eine Übersetzung von z. B. 1/10-1/15 aufweisen. Die Gesamtaktuatorkraft beträgt bei dieser praktischen Ausführung etwa einige kN, woraus an der Bremsscheibe eine maximale Bremskraft von einem Vielfachender Kraft resultiert. Der verschobene Nullpunkt liegt etwa im Gleichgewicht zwischen der Federkraft und der Bremskraft.

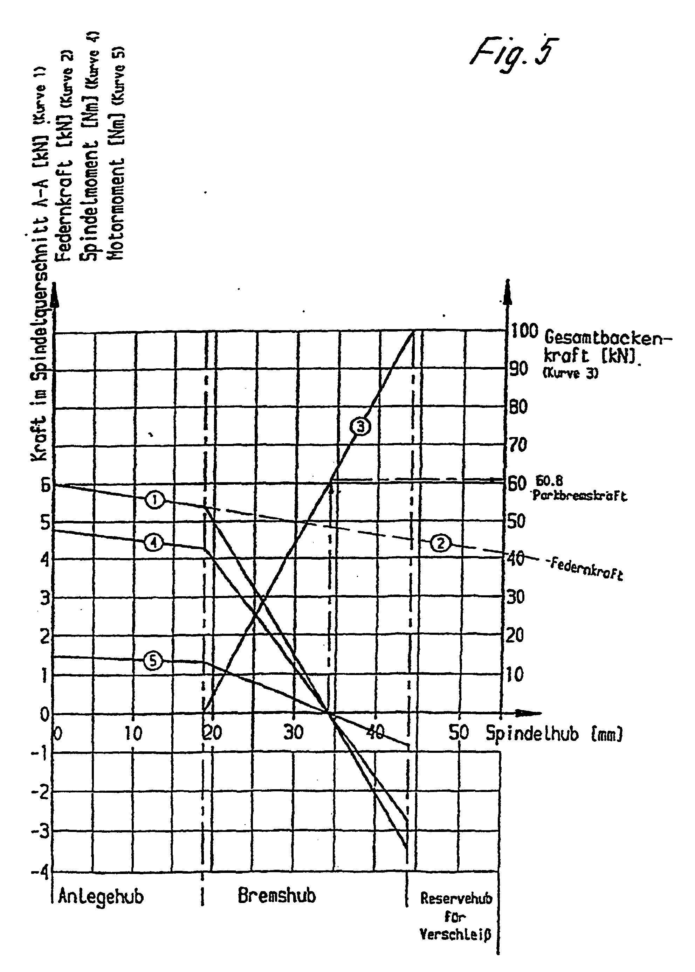

Fig. 5 zeigt schließlich noch die Kraft im Spindelquerschnitt (Kurve 1; siehe in Fig. 3 die Linie A-A). Im Anlegehub liegen einige kN an, im Bremshub fällt die Kraft ab und erreicht bei einem Spindellhub von einigen cm den Wert ON, um bei zunehmendem Spindelhub in den negativen Bereich überzutreten. Ebenfalls dargestellt sind die Federkraft (Kurve 2), die Gesamtbackenkraft, die weitestgehend linear während des Bremshubs zunimmt (Kurve 3), das Spindelmoment (Kurve 4) und das Motormoment (Kurve 5)

### Bezugszeichen

- Zuspannvorrichtung: 2
- Schienenfahrzeug-Scheibenbremse: 4
- Elektromotor: 6
- Motorbremse: 6'
- Abtriebswelle: 8
- Zahnriemen: 10
- Ritzel: 12
- Spindelhülse: 14
- Nadellager: 16
- Magnet-Zahnkupplung: 18
- Stromzuführung: 19
- Bolzen: 20
- Kugellager: 22
- Hülse: 23
- Öffnung: 24
- Bremsrahmen: 26
- Abschnitte: 26a, 26b
- Abdeckung: 28
- Rückstellmutter: 30
- Ansatz: 26c
- Wälzlagers: 32
- Hülse: 34
- Hülsenmutter: 36
- tellerartiger Hülsenansatz: 34'
- Federpaket: 38
- Auge: 40
- Langloch: 41
- Bolzen: 42
- Exzenterhebels: 44
- Exzenters: 46
- Exzenterwelle: 48
- Zangenhebel: 49
- Bremszange: 50
- Belaghalter: 52
- Bremsbeläge .: 54
- Bremsscheibe: 56
- Druckstangensteller: 58
- Umsetzer: 60

## Patentansprüche

1. Zuspannvorrichtung für eine Fahrzeugbremse, insbesondere Zuspannvorrichtung für eine Schienenfahrzeugbremse, vorzugsweise Zuspannvorrichtung (2) für eine Schienenfahrzeug-Scheibenbremse, mit:
a) einem Bremsantrieb (6) zum Zuspannen und/oder Lösen der Fahrzeugbremse,
b) einem Energiespeicher (38) zum Speichern und Abgeben von Energie zum Zuspannen und/oder Lösen der Bremse;
c) einem Umsetzer (60) zur Umsetzung der vom Bremsantrieb (6) - und/oder vom Energiespeicher - abgegebenen Energie in eine Bremszuspannbewegung,
**dadurch gekennzeichnet, daß**
d) der Umsetzer (60) derart ausgelegt ist, daß an einem definierten Betriebspunkt für einen Bremszuspannkraftwert zwischen Null und der maximalen Bremskraft die Bremskraft allein vom Energiespeicher erzeugt wird.

2. Zuspannvorrichtung nach Anspruch 1, **dadurch gekennzeichnet, daß** der Umsetzer (60) derart ausgelegt ist, daß die vom Bremsantrieb (6) bei einer Bremsung aufzubringende Kraft zur Erzeugung für eine definierte Bremszuspannkraft, die im Bereich zwischen ca. 25% und 75% der maximalen Bremskraft liegt, Null Newton beträgt.

3. Zuspannvorrichtung nach Anspruch 2, **dadurch gekennzeichnet, daß** der Umsetzer derart ausgelegt ist, daß die vom Bremsantrieb bei einer Bremsung aufzubringende Kraft zur Erzeugung für eine definierte Bremszuspannkraft, die im Bereich zwischen 40% und 60% der maximalen Bremskraft liegt, Null Newton beträgt.

4. Zuspannvorrichtung nach Anspruch 3, **dadurch gekennzeichnet, daß** der Uumsetzer (60) derart ausgelegt ist, daß die vom Bremsantrieb (6) bei einer Bremsung aufzubringende Kraft zur Erzeugung für eine definierte Bremszuspannkraft, die bei 50% der maximalen Bremskraft liegt, Null Newton beträgt.

5. Zuspannvorrichtung nach einem der vorstehenden Ansprüche, **dadurch gekennzeichnet, daß** der Bremsantrieb ein Elektromotor (6) ist.

6. Zuspannvorrichtung nach einem der vorstehenden Ansprüche, **dadurch gekennzeichnet, daß** der Bremsantrieb ein in zwei Betätigungsrichtungen wirkender Bremszylinder ist.

7. Zuspannvorrichtung nach einem der vorstehenden Ansprüche, **dadurch gekennzeichnet, daß** der Bremszylinder hydraulisch oder pneumatisch wirkend ausgelegt ist.

8. Zuspannvorrichtung nach einem der vorstehenden Ansprüche, **dadurch gekennzeichnet, daß** der Energiespeicher eine Feder oder ein Federpaket (38) zur Zuspannung der Bremse aufweist.

9. Zuspannvorrichtung nach einem der vorstehenden Ansprüche, **dadurch gekennzeichnet, daß** die Feder oder das Federpaket (38) derart ausgelegt sind, daß mit ihnen bei nicht aktivem Bremsantrieb (6) eine definierte, insbesondere eine mittlere, Bremskraft erzeugbar ist.

10. Zuspannvorrichtung nach einem der vorstehenden Ansprüche, **dadurch gekennzeichnet, daß** der Elektromotor (6) und die Feder bzw. das Federpaket (38) derart aufeinander abgestimmt sind, daß
- die Feder oder das Federpaket (38) allein einen definierten Bremskraftwert zwischen der minimalen und der maximalen Bremskraft (Betriebsnullpunkt),
- die Feder und der Elektromotor (6) in Kraftaddition eine Bremskraft größer als die definierte Bremskraft am Betriebsnullpunkt, und
- die Feder (38) und der Elektromotor (6) in Kraftsubtraktion eine Bremskraft kleiner als der Betriebsnullpunkt erzeugen.

11. Zuspannvorrichtung nach einem der vorstehenden Ansprüche, **dadurch gekennzeichnet, daß** der Bremsantrieb (6) auf einen Linearantrieb (14, 20, 34) zum Zuspannen und Lösen eines Zuspannelementes einwirkt.

12. Zuspannvorrichtung nach einem der vorstehenden Ansprüche, **dadurch gekennzeichnet, daß** das Zuspannelement eine Schienenfahrzeug-Bremszange (50) zum Zuspannen von Bremsbelägen (54) für eine Bremsscheibe (56) ist.

13. Zuspannvorrichtung nach einem der vorstehenden Ansprüche, **dadurch gekennzeichnet, daß** der Elektromotor (6) über einen Zahnriemen (10) ein Ritzel (12) antreibt, welches auf einer Spindelhülse (14) drehbar gelagert ist.

14. Zuspannvorrichtung nach einem der vorstehenden Ansprüche, **dadurch gekennzeichnet, daß** die Spindelhülse (14) auf einem Bolzen (20) befestigt ist, der drehbar in einem Bremsrahmen (26) gelagert ist.

15. Zuspannvorrichtung nach einem der vorstehenden Ansprüche, **dadurch gekennzeichnet, daß** die Drehspindel (14) drehbar am Bremsrahmen (26) gelagert ist.

16. Zuspannvorrichtung nach einem der vorstehenden Ansprüche, **dadurch gekennzeichnet, daß** der Bolzen (20) axial über das Ende der Spindelhülse (14) vorsteht und in diesem Bereich mit einem Gewinde versehen ist, auf welches eine Hülsenmutter (36) aufgeschraubt ist.

17. Zuspannvorrichtung nach einem der vorstehenden Ansprüche, **dadurch gekennzeichnet, daß** die Hülsenmutter (36) in eine Hülse (34) eingesetzt ist, wobei die Hülse derart angeordnet ist, daß sie sich mit der Hülsenmutter (36) beim Drehen des Bolzens (20) relativ zum Bolzen (20) axial verschiebt.

18. Zuspannvorrichtung nach einem der vorstehenden Ansprüche, **dadurch gekennzeichnet, daß** an einem axialen Ende der Hülse (34) ein Exzenterhebel (44) einer Exzenteranordnung (46) angreift, die mit einer Bremszange (50) gekoppelt ist.

19. Zuspannvorrichtung nach einem der vorstehenden Ansprüche, **dadurch gekennzeichnet, daß** zwischen den Elektromotor (6) und die Spindelhülse (14) eine Kupplung geschaltet ist.

20. Zuspannvorrichtung nach einem der vorstehenden Ansprüche, **dadurch gekennzeichnet, daß** die Kupplung als Magnet-Zahnkupplung (18) ausgebildet ist.

## Claims

1. Application device for a vehicle brake, in particular application device for a rail vehicle brake, preferably application device (2) for a disk brake for rail vehicles, comprising:
a) a brake drive (6) for the application and/or release of the vehicle brake;
b) an energy storage device (38) for the storage and delivery of energy for the application and/or release of the brake;
c) a converter (60) for the conversion of the energy delivered by the brake drive (6) - and/or the energy storage device - into a brake application movement.
**characterised in that**
d) the converter (60) is so designed that, at a defined operating point for a brake application force value between zero and maximum braking force, the braking force is generated by the energy storage device only.

2. Application device according to claim 1, **characterised in that** the converter (60) is so designed that the force to be applied by the brake drive (6) during a braking process to generate a defined brake application force between approximately 25% and 75% of the maximum braking force is zero Newton.

3. Application device according to claim 2, **characterised in that** the converter is so designed that the force to be applied by the brake drive during a braking process to generate a defined brake application force between approximately 40% and 60% of the maximum braking force is zero Newton.

4. Application device according to claim 3, **characterised in that** the converter (60) is so designed that the force to be applied by the brake drive (6) during a braking process to generate a defined brake application force of around 50% of the maximum braking force is zero Newton.

5. Application device according to any of the preceding claims, **characterised in that** the brake drive is an electric motor (6).

6. Application device according to any of the preceding claims, **characterised in that** the brake drive is a brake cylinder acting in two operating directions.

7. Application device according to any of the preceding claims, **characterised in that** the brake cylinder is designed to act hydraulically or pneumatically.

8. Application device according to any of the preceding claims, **characterised in that** the energy storage device incorporates a spring or a spring assembly (38) for the application of the brake.

9. Application device according to any of the preceding claims, **characterised in that** the spring or the spring assembly (38) is so designed that a defined, in particular average, braking force can be generated thereby when the brake drive (6) is inactive.

10. Application device according to any of the preceding claims, **characterised in that** the electric motor (6) and the spring or spring assembly (38) are so matched to one another that the spring or the spring assembly (38) on its own generates a defined braking force value between minimum and maximum braking force (operating zero point),
that the spring and the electric motor (6) generate a braking force greater than the defined braking force at operating zero point in the force addition mode, and
that the spring (38) and the electric motor (6) generate a braking force less that the operating zero point in the force subtraction mode.

11. Application device according to any of the preceding claims, **characterised in that** the brake drive (6) acts on a linear drive (14, 20, 34) for the application and release of an application element.

12. Application device according to any of the preceding claims, **characterised in that** the application element is a rail vehicle brake calliper (50) for the application of brake pads (54) for a disk brake (56).

13. Application device according to any of the preceding claims, **characterised in that** the electric motor (6) drives a pinion (12) rotatably mounted on a spindle sleeve (14) via a toothed belt (10).

14. Application device according to any of the preceding claims, **characterised in that** the spindle sleeve (14) is attached to a bolt (20) rotatably mounted in a brake frame (26).

15. Application device according to any of the preceding claims, **characterised in that** the rotary spindle (14) is rotatably mounted on the brake frame (26).

16. Application device according to any of the preceding claims, **characterised in that** the bolt (20) axially projects beyond the end of the spindle sleeve (14) and has a thread onto which a sleeve nut (36) is threaded in this region.

17. Application device according to any of the preceding claims, **characterised in that** the sleeve nut (36) is installed in a sleeve (34) whereby the sleeve is so arranged that it is axially displaced relative to the bolt (20) together with the sleeve nut (36) when the bolt (20) is turned.

18. Application device according to any of the preceding claims, **characterised in that** an eccentric lever (44) of an eccentric assembly (46) coupled to a brake calliper (50) acts on one axial end of the sleeve (34).

19. Application device according to any of the preceding claims, **characterised in that** a clutch is installed between the electric motor (6) and the spindle sleeve (14).

20. Application device according to any of the preceding claims, **characterised in that** the clutch is designed as a magnetic tooth clutch (18).

## Revendications

1. Dispositif de serrage d'un frein de véhicule automobile, notamment dispositif de serrage d'un frein de véhicule sur rail, de préférence dispositif (2) de serrage d'un frein à disque de véhicule sur rail, comprenant :
a) un dispositif (6) d'entraînement de frein pour serrer et/ou desserrer le frein du véhicule automobile,
b) un accumulateur (38) d'énergie pour emmagasiner et céder de l'énergie pour le serrage et/ou le desserrage du frein;
c) un convertisseur (60) de conversion en un mouvement de serrage du frein de l'énergie cédée par le dispositif (6) d'entraînement du frein et/ou par l'accumulateur d'énergie,
**caractérisé en ce que**
d) le convertisseur (60) est conçu de façon à produire, en un point de fonctionnement défini pour une valeur de la force de serrage du frein entre zéro et la force de freinage maximum, la force de freinage seulement par l'accumulateur d'énergie.

2. Dispositif de serrage suivant la revendication 1, **caractérisé en ce que** le convertisseur (60) est conçu de façon à ce que la force appliquée par le dispositif (6) d'entraînement du frein lors d'un freinage, pour la production d'une force de serrage de frein définie qui est comprise entre environ 25% et 75% de la force maximum de freinage, est égale à zéro newton.

3. Dispositif de serrage suivant la revendication 2, **caractérisé en ce que** le convertisseur est conçu de façon à ce que la force appliquée par le dispositif d'entraînement du frein pour un freinage, pour la production d'une force de serrage du frein définie qui est comprise entre 40% et 60% de la force maximum de freinage, est égale à zéro newton.

4. Dispositif de serrage suivant la revendication 3, **caractérisé en ce que** le convertisseur (60) est conçu de façon à ce que la force appliquée par le dispositif (6) d'entraînement du frein pour un freinage, pour la production d'une force de serrage du frein définie qui représente 50% de la force maximum de freinage, est égale à zéro newton.

5. Dispositif de serrage suivant l'une des revendications précédentes, **caractérisé en ce que** le dispositif d'entraînement du frein est un moteur (6) électrique.

6. Dispositif de serrage suivant l'une des revendications précédentes, **caractérisé en ce que** le dispositif d'entraînement du frein est un cylindre de frein, agissant dans deux sens d'actionnement.

7. Dispositif de serrage suivant l'une des revendications précédentes, **caractérisé en ce que** le cylindre de frein est hydraulique ou pneumatique.

8. Dispositif de serrage suivant l'une des revendications précédentes, **caractérisé en ce que** l'accumulateur d'énergie comporte un ressort ou un paquet (38) de ressorts pour le serrage du frein.

9. Dispositif de serrage suivant l'une des revendications précédentes, **caractérisé en ce que** le ressort ou le paquet (38) de ressorts sont conçus de façon à pouvoir obtenir grâce à lui, lorsque le dispositif (6) d'entraînement du frein n'est pas actif, une force de freinage définie, notamment une force de freinage moyenne.

10. Dispositif de serrage suivant l'une des revendications précédentes, **caractérisé en ce que** le moteur (6) électrique et le ressort ou le paquet (38) de ressorts sont accordés l'un à l'autre de façon à ce que le,
- le ressort ou le paquet (38) de ressorts produise seul une force de freinage définie entre la force de freinage minimum et la force de freinage maximum (point zéro de fonctionnement),
- le ressort et le moteur (6) électrique produisent, par addition de force, une force de freinage plus grande que la force de freinage définie au point zéro de fonctionnement, et
- le ressort (38) et le moteur (6) électrique produisent, par soustraction de force, une force de freinage plus petite que le point zéro de fonctionnement.

11. Dispositif de serrage suivant l'une des revendications précédentes, **caractérisé en ce que** le dispositif (6) d'entraînement du frein agit sur un dispositif (14, 20, 34) d'entraînement linéaire pour le serrage et le desserrage de l'élément de serrage.

12. Dispositif de serrage suivant l'une des revendications précédentes, **caractérisé en ce que** l'élément de serrage est une pince (50) de frein de véhicule automobile sur rail pour serrer des garnitures (54) de frein d'un disque (56) de frein.

13. Dispositif de serrage suivant l'une des revendications précédentes, **caractérisé en ce que** le moteur (6) électrique entraîne par une courroie (10) dentée un pignon (12), qui est monté tournant sur un manchon (14) de broche.

14. Dispositif de serrage suivant l'une des revendications précédentes, **caractérisé en ce que** le manchon (14) de broche est fixé sur un axe qui est monté tournant dans un châssis (26) de frein.

15. Dispositif de serrage suivant l'une des revendications précédentes, **caractérisé en ce que** le manchon (14) de broche est monté tournant sur le châssis (26) de frein.

16. Dispositif de serrage suivant l'une des revendications précédentes, **caractérisé en ce que** l'axe (20) est en saillie axialement de l'extrémité du manchon (14) de la broche et dans cette zone est munie d'un filetage sur lequel se visse un écrou (36) de manchon.

17. Dispositif de serrage suivant l'une des revendications précédentes, **caractérisé en ce que** l'écrou (36) de manchon est mis dans un manchon (34), le manchon étant disposé de façon à se décaler axialement par rapport à l'axe (20) avec l'écrou (36) de manchon lors de la rotation de l'axe (20).

18. Dispositif de serrage suivant l'une des revendications précédentes, **caractérisé en ce qu'**un levier (14) d'un excentrique (46), qui est couplé à la pince (50) de frein, attaque une extrémité axiale du manchon (34).

19. Dispositif de serrage suivant l'une des revendications précédentes, **caractérisé en ce qu'**un embrayage est monté entre le moteur (6) électrique et le manchon (14) de broche.

20. Dispositif de serrage suivant l'une des revendications précédentes, **caractérisé en ce que** l'embrayage est constitué en embrayage (18) magnétique à denture.
